# FASCICULE DE BREVET EUROPEEN

(11) **EP 3 224 523 B1**
(45) Date de publication et mention de la délivrance du brevet: **19.08.2020**
(21) Numéro de dépôt: 15787973.5
(22) Date de dépôt: 28.10.2015
(51) Int. Cl.: F16L 37/12

(54) **PIECE POUR LE RACCORDEMENT COAXIAL DE DEUX TUBULURES**
TEIL EINER KOAXIALEN STECKVERBINDUNG VON ZWEI RÖHREN
PART FOR COAXIAL CONNECTION OF TWO TUBES

(30) Priorité: 28.11.2014 FR 1461663
(43) Date de publication de la demande: 04.10.2017
(73) Titulaire: Valeo Systemes Thermiques, 78320 Le Mesnil Saint Denis (FR)
(72) Inventeur: KERG, Philippe, F-78322 Le Mesnil Saint-Denis Cédex (FR); LE GOFF, Morgan, F-78322 Le Mesnil Saint-Denis Cédex (FR)
(74) Mandataire: Tran, Chi-Hai
(86) Numéro de dépôt international: PCT/EP2015/074931
(87) Numéro de publication internationale: WO 2016/083056

(56) Documents cités:
- EP-A2- 2 065 628
- DE-A1- 10 029 366
- DE-A1- 19 838 588
- DE-B3-102012 106 232

## Description

La présente invention a pour objet une pièce pour le raccordement coaxial de deux tubulures, en particulier pour le raccordement bout à bout de deux tubulures dans un circuit de fluide, notamment dans un véhicule automobile. L'invention a également pour objet un dispositif de raccordement axial de deux tubulures muni de cette pièce et un procédé de raccordement axial de deux tubulures mettant en œuvre ladite pièce.

Les véhicules automobiles sont des lieux clos de faible volume, soumis à des environnements changeants. Il est donc indispensable d'y renouveler régulièrement l'air, et d'en réguler la température.

On utilise à cet effet des dispositifs de climatisation, ou climatiseurs. Ces systèmes sont conçus de façon à ce que de l'air chauffé ou refroidi soit soufflé à l'intérieur du véhicule.

Les dispositifs de climatisation pour véhicule automobile, en particulier les systèmes HVAC (Heating, Ventilation and Air Conditioning en langue anglaise) comportent généralement un circuit d'air entre au moins une bouche d'admission et au moins une bouche d'évacuation, sur lequel sont interposés divers moyens de traitement de l'air. La bouche d'admission d'air est une entrée d'air extérieur et/ou une entrée d'air recyclé. Les moyens de traitement de l'air sont notamment des moyens de ventilation pour mettre en mouvement un flux d'air à travers le circuit, des moyens de chauffage et/ou de refroidissement, comme par exemple un radiateur de chauffage d'air et un évaporateur destiné à refroidir l'air.

Le radiateur de chauffage d'air est relié à des tubulures, typiquement des tubulures traversant le tablier du véhicule en direction d'un système de refroidissement du moteur.

On connaît déjà de manière générale des dispositifs de raccordement de ce type qui sont utilisés plus particulièrement pour assurer une connexion à l'intérieur d'un circuit de fluide caloporteur dans un véhicule automobile. A cet effet, une application particulière d'un tel dispositif est le raccordement d'une tubulure d'entrée ou de sortie d'un échangeur de chaleur, dans lequel le fluide caloporteur doit échanger de la chaleur avec un autre milieu, et une conduite amenant le fluide dans ou hors de cet échangeur de chaleur.

Par le terme "tubulure" on entend désigner ici généralement tout moyen de transfert de fluide, qui comprend au moins une partie tubulaire, telle que, par exemple, un tube, un conduit, un embout, une entretoise, etc. Le dispositif de raccordement a pour fonction de solliciter axialement l'un vers l'autre un élément de raccordement d'une première tubulure, comme une collerette et un élément de raccordement d'une deuxième tubulure, comme un bourrelet. Pour renforcer l'étanchéité, un joint annulaire d'étanchéité est serré de façon étanche entre les deux éléments de raccordement.

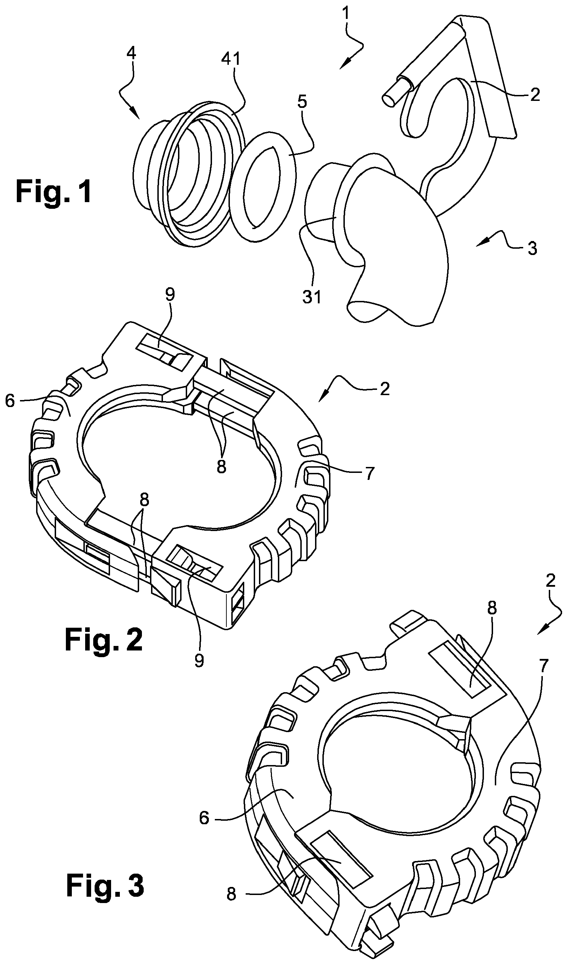

Un tel dispositif 1 est illustré à la figure 1. Une pièce 2 sous la forme d'un collier ouvert, tel que décrite par exemple dans le document EP 1 533 558, est utilisée pour le raccordement coaxial d'une première tubulure 3, qui est une tubulure mâle, et d'une seconde tubulure 4, qui est une tubulure femelle.

La première tubulure 3 comporte une région d'extrémité munie d'un bourrelet périphérique 31 qui définit un rebord annulaire, tandis que la deuxième tubulure 4 comprend une région d'extrémité qui définit une collerette 41 dans laquelle vient s'engager, au moins en partie, le bourrelet 31. Les régions d'extrémité sont conçues pour coopérer mutuellement, ici par emboîtement.

Dans l'exemple, la deuxième tubulure 4 constitue une tubulure d'entrée ou de sortie d'un échangeur de chaleur, tandis que la première tubulure 3 constitue une conduite amenant un fluide caloporteur dans ou hors de cet échangeur de chaleur. Dans une application préférentielle de l'invention, l'échangeur de chaleur constitue un radiateur de refroidissement d'un moteur de véhicule automobile ou encore un radiateur de chauffage de l'habitacle d'un tel véhicule.

Pour réaliser une liaison étanche entre les deux tubulures 3,4, un joint annulaire d'étanchéité 5 est inséré au montage entre la collerette 41 et le bourrelet 31, le collier ouvert 2 étant agencé pour solliciter axialement l'un vers l'autre le bourrelet 31 et la collerette 41 pour comprimer le joint 5 et garantir l'étanchéité.

La pièce de raccordement 2, en forme de collier ouvert, est adaptée pour s'engager latéralement (assemblage radial) sur les deux tubulures 3,4 dont les régions d'extrémité ont préalablement été emboîtées.

Ce type de pièce de raccordement a pour inconvénient que l'assemblage n'est pas sûr et qu'il n'est pas possible de pré-assembler la pièce de raccordement sur les deux tubulures.

Le document DE 10 2012 106232 décrit un dispositif pour le raccordement d'une première tubulure et d'une deuxième tubulure.

L'invention vise à remédier à ces inconvénients.

L'invention a ainsi pour objet une pièce pour le raccordement coaxial de deux tubulures.

La pièce selon l'invention telle que définie par la revendication 1 comprend deux parties de raccordement munies chacune d'une zone de réception d'un élément de raccordement de chaque tubulure, les deux parties de raccordement étant aptes à coulisser l'une dans l'autre, entre une position écartée des deux parties et une position resserrée des deux parties dans laquelle les deux zones de réception sont aptes à maintenir les éléments de raccordement ensemble et à former un contour fermé, par exemple en sollicitant axialement l'un vers l'autre les éléments de raccordement.

Ainsi, le coulissement des deux parties de raccordement l'une dans l'autre permet de définir une position écartée (ouverte) dans laquelle les deux parties sont à distance des tubulures et dans laquelle il est possible de pré-assembler la pièce sur l'une des deux tubulures, et une position resserrée (fermée) dans laquelle les zone de réception des deux parties sollicitent axialement l'un vers l'autre les éléments de raccordement des tubulures, ce qui permet de réaliser le raccordement. En outre, le contour fermé formé par la réunion des deux parties de raccordement dans la position resserrée permet un raccordement plus sûr.

La zone de réception de chaque partie de raccordement peut être une rainure.

Chaque partie de raccordement peut être un demi-anneau, de sorte que la pièce en position resserrée forme un anneau.

Les zones de réception des deux parties de raccordement peuvent former une rainure annulaire disposée dans un plan radial de la pièce.

La rainure peut être délimitée par deux bordures extérieures, qui peuvent être de largeurs radiales différentes.

Chaque partie de raccordement comprend une zone mâle coulissant dans une zone femelle associée de l'autre partie, et une zone femelle dans laquelle coulisse la zone mâle de l'autre partie de raccordement.

La zone mâle de chaque partie de raccordement comprend au moins un bras coulissant dans au moins un rail de la zone femelle de l'autre partie de raccordement.

Un bossage peut être disposé dans chaque rail, de manière à maintenir les deux parties de raccordement dans une position écartée.

Chaque partie de raccordement est munie d'au moins un clip, de manière à ce que la position resserrée des deux parties de raccordement soit obtenue par clippage.

Chaque zone mâle peut être apte à se clipper dans sa zone femelle associée.

Chaque partie de raccordement comprend en outre un élément en saillie du pourtour de la partie et qui vient se clipper dans une ouverture de l'autre partie de raccordement.

L'invention a également pour objet l'utilisation d'une pièce décrite ci-dessus pour le raccordement coaxial de deux tubulures.

L'invention a également pour objet un dispositif pour le raccordement coaxial de deux tubulures, par coopération d'une région d'extrémité d'une première tubulure avec une région d'extrémité d'une deuxième tubulure. Le dispositif selon l'invention comprend une pièce de raccordement décrite ci-dessus et qui est disposée autour d'éléments de raccordement des deux tubulures.

Chaque tubulure comprenant un élément de raccordement, l'élément de raccordement de la première tubulure peut être un bourrelet et l'élément de raccordement de la deuxième tubulure peut être une collerette.

Le bourrelet de la première tubulure peut être apte à être reçu dans la collerette de la seconde tubulure.

Le dispositif peut comprendre en outre un joint annulaire d'étanchéité.

L'invention a enfin pour objet un procédé de raccordement coaxial de deux tubulures à l'aide d'une pièce de raccordement décrite ci-dessus.

Le procédé comprend, dans une région d'extrémité des deux tubulures et autour des éléments de raccordement des deux tubulures, une étape de coulissement des deux parties de raccordement depuis une position écartée des deux parties jusqu'à une position resserrée des deux parties dans laquelle les deux zones de réception des deux parties forment un contour fermé et maintiennent les éléments de raccordement ensemble, par exemple en sollicitant axialement l'un vers l'autre les éléments de raccordement.

Le procédé peut comprendre, préalablement à l'étape de coulissement, une étape de pré-positionnement de la pièce de raccordement, en position écartée des deux parties de raccordement, autour d'une région d'extrémité d'une des deux tubulures. On peut ainsi pré-positionner la pièce en position écartée sur une tubulure femelle, le procédé se poursuivant par l'insertion d'une tubulure mâle dans la tubulure femelle puis par le coulissement des deux parties de raccordement jusqu'à la position resserrée dans laquelle les deux tubulures sont raccordées.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1, déjà décrite, est une vue partielle éclatée d'un dispositif de raccordement coaxial de deux tubulures utilisant une pièce de raccordement de l'état de la technique,
- la figure 2 illustre une pièce de raccordement selon l'invention, en position ouverte,
- la figure 3 illustre une pièce de raccordement selon l'invention, en position fermée,
- les figures 4 et 5 sont des vues de détail de la figure 2,
- la figure 6 illustre la pièce de raccordement dans une variante de réalisation,
- la figure 7 illustre un dispositif de raccordement muni de la pièce de raccordement de la figure 6,
- la figure 8 est une vue en coupe longitudinale d'une zone de raccordement de deux tubulures, et
- les figures 9 à 11 sont des vues en perspective de différentes étapes d'un procédé de raccordement coaxial de deux tubulures selon l'invention.

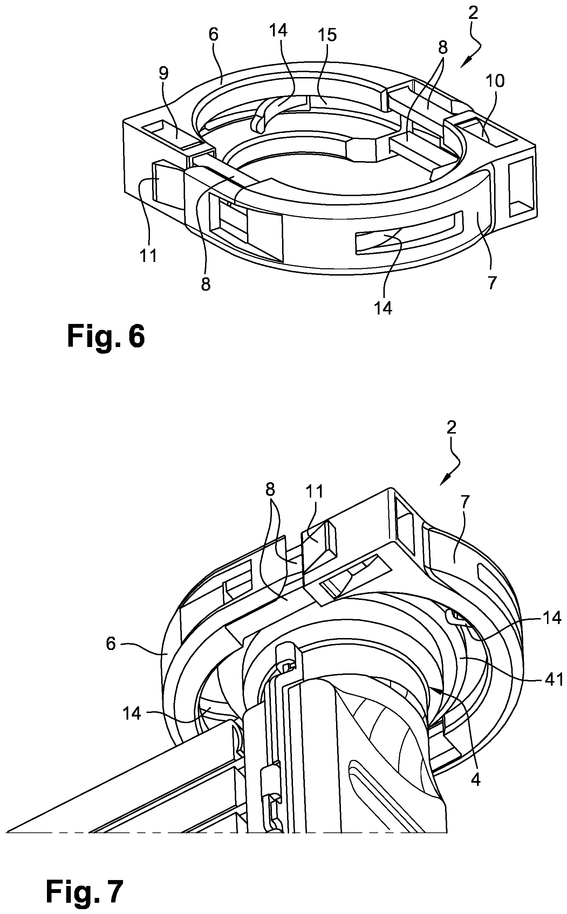

Tel qu'illustrée sur les figures 2 et 3, une pièce de raccordement 2 selon l'invention comprend deux demi-parties de raccordement 6,7 qui s'emboîtent par translation de chaque partie 6,7 l'une dans l'autre. Les deux parties 6,7 peuvent être identiques. Chaque partie 6,7 peut se présenter sous la forme d'un demi-anneau et comprend une zone de réception 15 (figure 6) d'au moins un élément de raccordement des deux tubulures. La zone de réception 15 est destinée à maintenir ensemble l'élément de raccordement de la première tubulure et l'élément de raccordement de la deuxième tubulure, à la manière d'une pince, par exemple en sollicitant axialement l'un vers l'autre l'élément de raccordement de la première tubulure et l'élément de raccordement de la deuxième tubulure, de manière à assurer le raccordement des deux tubulures.

Chaque partie 6,7 comprend également un élément mâle 8 apte à s'insérer dans un élément femelle 9 de l'autre partie 7,6 et un élément femelle 9 apte à recevoir l'élément mâle 8 de l'autre partie 7,6. L'élément mâle 8 est avantageusement disposé à une extrémité du demi-anneau 6,7 tandis que l'élément femelle 9 est disposé à l'autre extrémité.

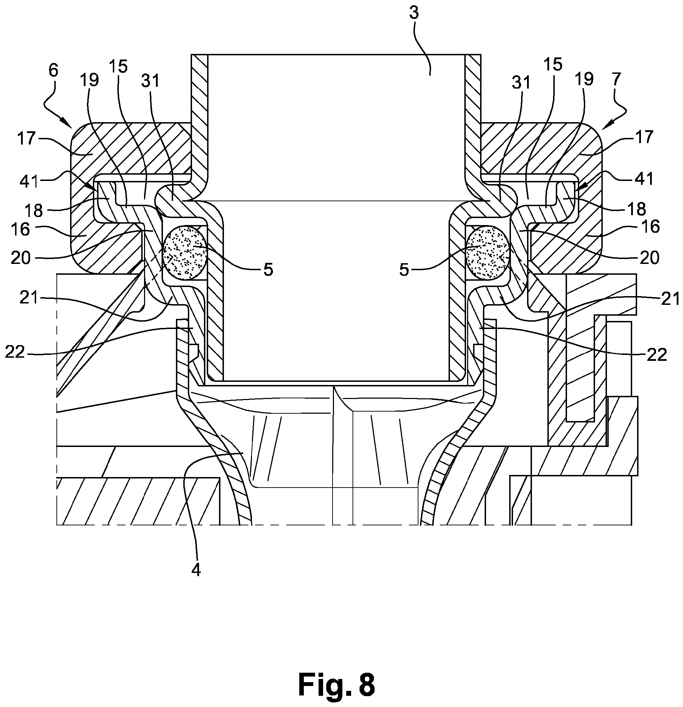

La zone de réception 15 est typiquement une rainure formée dans chaque demi-anneau 6,7 et dans laquelle peut s'insérer le ou les éléments de raccordement des tubulures, qui sont des éléments de préhension. Les éléments de raccordement des tubulures 3,4 sont maintenus dans la zone de réception 15. L'élément de raccordement est typiquement une collerette 41 d'une des deux tubulures 4 et/ou un bourrelet 31 de l'autre tubulure 3 (figure 8).

Dans chaque partie 6,7, l'élément mâle 8 comprend au moins un bras, apte à coulisser dans l'élément femelle 9 de l'autre partie 7,6, ledit élément femelle 9 étant un rail de guidage. A titre d'exemple, et tel qu'illustré sur les figures 2 et 3, chaque partie 6,7 peut comprend deux bras coulissant dans deux rails de l'autre partie 7,6.

Grâce au coulissement relatif des deux demi-anneaux 6,7, la pièce de raccordement 2 est mobile entre une position ouverte dans laquelle la pièce 2 peut être pré-positionnée sur les deux tubulures 3,4, et illustrée à la figure 2, et une position fermée dans laquelle la pièce 2 assure le raccordement des deux tubulures 3,4, et illustrée à la figure 3.

La position fermée est avantageusement assurée à l'aide de clips, par exemple à l'aide de clips radiaux (figures 2 à 4). Chaque élément mâle 8 est ainsi muni à son extrémité d'un élément en saillie 10 sous la forme d'une protubérance, à la manière d'un clip, par exemple de section triangulaire en coupe longitudinale, qui vient se clipper par une force de rappel à la sortie de l'élément femelle 9 dans lequel coulisse l'élément mâle 8. De manière similaire, chaque partie de raccordement 6,7 comprend en outre un élément 11 en saillie du pourtour de la partie 6,7, ledit élément en saillie 11 pouvant être par exemple de section triangulaire en coupe radiale, et qui vient se clipper par une force de rappel dans une ouverture de l'autre partie 7,6. Les deux parties de raccordement 6,7 peuvent être munies d'échancrures, ce qui procure un gain de matière.

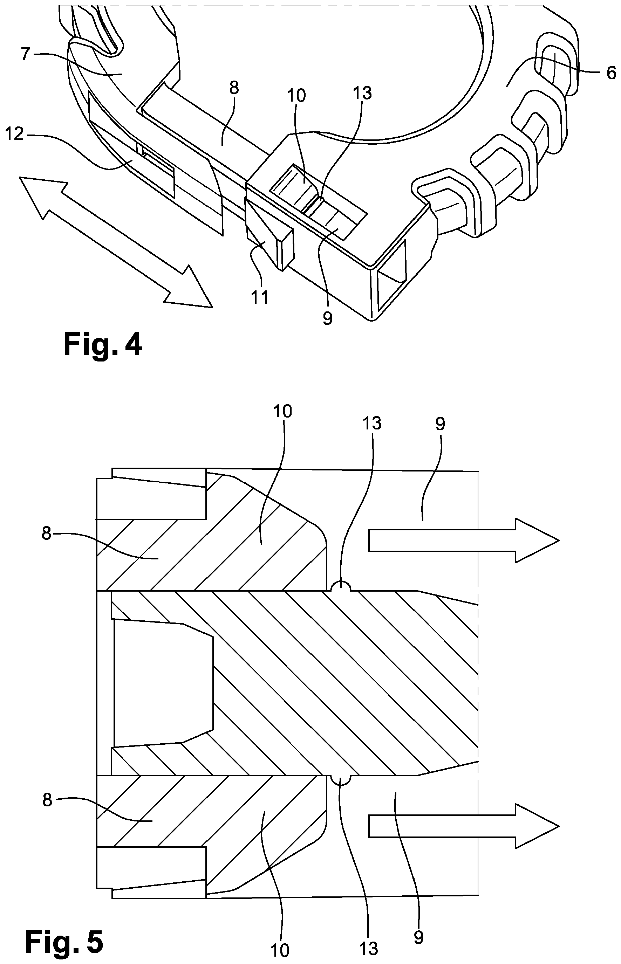

Dans le mode de réalisation illustré aux figures 4 et 5, un bossage ou une nervure 13 est disposée dans chaque rail de guidage, de manière à créer un obstacle dans l'élément femelle 9, ce qui bloque l'élément mâle 8 et force la pièce de raccordement 2 à être en position ouverte et favorise ainsi le pré-positionnement de la pièce de raccordement 2 autour des tubulures 3,4. La nervure 13 permet de bloquer le clip en position ouverte, mais l'utilisateur peut appliquer une force pour que l'élément mâle 8 enjambe la nervure 13 et se fixe dans l'ouverture 10 par la force de rappel du clip. Sur la figure 4, les flèches illustrent le sens de verrouillage et de déverrouillage de la pièce 2. Sur la figure 5, les flèches illustrent les trajectoires des clips.

Dans le mode de réalisation illustré aux figures 6 et 7, qui peut se combiner au mode de réalisation des figures 4 et 5, chaque partie 6,7 de la pièce de raccordement 2 est munie d'un élément de rappel 14 sous la forme d'une languette. L'élément de rappel 14 permet le pré-centrage des deux parties 6,7 sur les tubulures 3,4 avant le verrouillage de la pièce de raccordement 2. Ce pré-centrage permet de passer la tubulure mâle 3 à travers les deux parties 6,7 sans créer d'obstacle si la pièce de raccordement 2 est désaxée lors de son pré-montage avant verrouillage. L'élément de rappel 14 permet de maintenir la pièce 2 dans une position ouverte, mais il faut appliquer une force pour fermer la pièce 2.

La figure 8 illustre en coupe longitudinale la zone de raccordement entre les deux tubulures 3,4. La zone de réception 15 de la pièce de raccordement 2 accueille le bourrelet 31 de la première tubulure 3 et la collerette 41 de la deuxième tubulure 4. La zone de réception 15 de la pièce de raccordement 2 est délimitée par une bordure inférieure 16 et une bordure supérieure 17, parallèles entre elles et reliées par une bordure latérale qui leur est orthogonale. La collerette 41 de la deuxième tubulure 4 peut présenter une section en forme de L, dont une partie cylindrique 18 et une partie annulaire 19, et s'appuyer via sa partie annulaire 19 sur la bordure inférieure 16 de la pièce de raccordement 2. Le bourrelet 31 de la première tubulure peut être quant à lui en appui sur la bordure supérieure 17 de la pièce de raccordement, à l'intérieur de la collerette 41. La bordure supérieure 17 de la pièce de raccordement 2 est avantageusement plus large que la bordure inférieure 16, de manière à ce que la bordure supérieure 17 prenne appui sur le bourrelet 31 tandis qu'un joint 5 peut être disposé sous le bourrelet 31 au niveau de la bordure inférieure 16 de la pièce de raccordement 2.

La collerette 41 de la deuxième tubulure 4 peut se prolonger par une ou plusieurs parties cylindriques 20,22 concentriques et de rayons décroissants, séparées par des parties annulaires 19,21, le profil de l'extrémité de la deuxième tubulure 4 présentant ainsi une forme en escalier. De haut en bas, la bordure supérieure 17 de la pièce de raccordement 2 s'appuie ainsi sur le bourrelet 31 de la première tubulure 3, le bourrelet 31 s'appuyant sur le joint 5, qui s'appuie lui-même sur la partie annulaire inférieure 21 de la deuxième tubulure 2. La partie annulaire supérieure 19 de la tubulure 2, qui fait partie de la collerette 41, s'appuie quant à elle sur la bordure inférieure 16 de la pièce de raccordement 2.

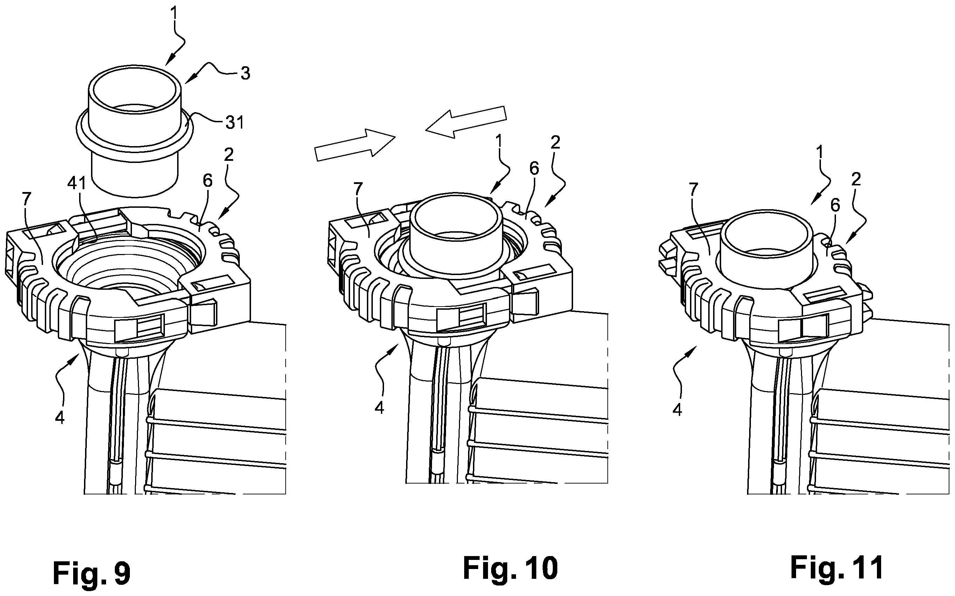

Les figures 9 à 11 illustrent les différentes étapes d'un procédé de raccordement coaxial de deux tubulures selon l'invention.

Dans une première étape, tel qu'illustré à la figure 9, la pièce de raccordement 2, dans sa configuration ouverte, est montée sur la deuxième tubulure 4, qui est typiquement une tubulure d'entrée ou de sortie d'un radiateur de refroidissement d'un moteur de véhicule automobile ou encore un radiateur de chauffage de l'habitacle d'un tel véhicule. La pièce de raccordement 2 est montée sur la collerette 41 de la deuxième tubulure 4, par exemple à l'aide des éléments de rappel radiaux 14 qui s'appuient sur la collerette 41 (figure 6). La nervure 13 permet de bloquer la pièce de raccordement 2 dans la configuration ouverte, tandis que les éléments de rappel 14 permettent le pré-assemblage de la pièce de raccordement 2 sur la deuxième tubulure 4.

Ce pré-assemblage permet d'insérer facilement la première tubulure 3 dans la deuxième tubulure 4 et ainsi de simplifier et de sécuriser la procédure de raccordement.

Une fois que la première tubulure 3 est insérée dans la deuxième tubulure 4, on rapproche les deux parties 6,7 de la pièce de raccordement 2 par translation des deux parties 6,7 dans les directions indiquées par les flèches (figure 10). Le procédé s'achève lorsque les deux parties 6,7 de la pièce de raccordement 2 sont clippées l'une dans l'autre, cette étape étant réalisée par application d'une force par l'utilisateur pour tout fermer. Ainsi, les deux parties 6,7 de la pièce de raccordement 2 encerclent et maintiennent le bourrelet 31 de la première tubulure 3 et la collerette 41 de la deuxième tubulure 4, ce qui assure le raccordement (figure 11).

## Revendications

1. Pièce (2) pour le raccordement coaxial de deux tubulures (3,4), comprenant deux parties de raccordement (6,7) munies chacune d'une zone de réception (15) pour un élément de raccordement (31,41) de chaque tubulure (3,4), les deux parties de raccordement (6,7) étant aptes à coulisser l'une dans l'autre, entre une position écartée des deux parties (6,7) et une position resserrée des deux parties (6,7) dans laquelle les deux zones de réception (15) sont aptes à maintenir les éléments de raccordement (31,41) ensemble et à former un contour fermé, chaque partie de raccordement (6,7) comprenant une zone mâle (8) coulissant dans une zone femelle associée (9) de l'autre partie (7,6), et une zone femelle (9) dans laquelle coulisse la zone mâle (8) de l'autre partie de raccordement (7,6),la zone mâle (8) de chaque partie de raccordement (6,7) comprenant au moins un bras coulissant dans au moins un rail de la zone femelle (9) de l'autre partie de raccordement chaque partie de raccordement (6,7) étant munie d'au moins un clip, de manière à ce que la position resserrée des deux parties de raccordement (6,7) soit obtenue par clippage, **caractérisée en ce que** chaque partie de raccordement (6,7) comprend en outre un élément (11) en saillie du pourtour de la partie de raccordement (6,7) et qui vient se clipper dans une ouverture (12) de l'autre partie de raccordement (7,6).

2. Pièce (2) selon la revendication 1, **caractérisée en ce que** la zone de réception (15) de chaque partie de raccordement (6,7) est une rainure.

3. Pièce (2) selon la revendication 1 ou 2, **caractérisée en ce que** chaque partie de raccordement (6,7) est un demi-anneau, de sorte que la pièce (2) en position resserrée forme un anneau.

4. Pièce (2) selon la revendication 3, **caractérisé en ce que** les zones de réception (15) des deux parties de raccordement (6,7) forment une rainure annulaire disposée dans un plan radial de la pièce (2).

5. Pièce (2) selon la revendication 4, **caractérisée en ce que** la rainure (15) est délimitée par deux bordures extérieures (16,17) de largeurs radiales différentes.

6. Pièce (2) selon l'une des revendications précédentes, **caractérisé en ce qu'**un bossage (13) est disposé dans chaque rail, apte à maintenir les deux parties de raccordement (6,7) dans une position écartée.

7. Dispositif (1) pour le raccordement coaxial de deux tubulures (3,4), par coopération d'une région d'extrémité d'une première tubulure (3) avec une région d'extrémité d'une deuxième tubulure (4), le dispositif comprenant les deux tubulures (3, 4), caractérisé ce qu'il comprend une pièce de raccordement (2) selon l'une des revendications 1 à 6 qui est disposée autour d'éléments de raccordement (31,41) des deux tubulures (3,4).

8. Dispositif (1) selon la revendication 7, **caractérisé en ce que**, chaque tubulure (3,4) comprenant un élément de raccordement (31,41), l'élément de raccordement (31) de la première tubulure (3) est un bourrelet et l'élément de raccordement (41) de la deuxième tubulure (4) est une collerette.

9. Dispositif (1) selon la revendication 7 ou 8, **caractérisé en ce qu'**il comprend en outre un joint annulaire d'étanchéité (5).

10. Procédé de raccordement coaxial de deux tubulures (3,4) à l'aide d'une pièce de raccordement (2) selon l'une des revendications 1 à 6, comprenant, dans une région d'extrémité des deux tubulures (3,4) et autour des éléments de raccordement (31,41) des deux tubulures (3,4), une étape de coulissement des deux parties de raccordement (6,7) depuis une position écartée des deux parties (6,7) jusqu'à une position resserrée des deux parties (6,7) dans laquelle les deux zones de réception (15) des deux parties (6,7) forment un contour fermé et maintiennent les éléments de raccordement (31,41) ensemble.

11. Procédé selon la revendication 10, **caractérisé en ce qu'**il comprend, préalablement à l'étape de coulissement, une étape de pré-positionnement de la pièce de raccordement (2), en position écartée des deux parties de raccordement (6 ,7), autour d'une région d'extrémité d'une des deux tubulures (3,4).

## Patentansprüche

1. Teil (2) für das koaxiale Verbinden von zwei Stutzen (3, 4), beinhaltend zwei Verbindungsabschnitte (6, 7), die jeweils über einen Aufnahmebereich (15) für ein Verbindungselement (31, 41) jedes Stutzens (3, 4) verfügen, wobei die zwei Verbindungsabschnitte (6, 7) fähig sind, ineinander zu gleiten, zwischen einer voneinander beabstandeten Position der zwei Abschnitte (6, 7) und einer miteinander verspannten Position der zwei Abschnitte (6, 7), in welcher die zwei Aufnahmebereiche (15) fähig sind, die Verbindungselemente (31, 41) zusammenzuhalten und eine geschlossene Kontur zu bilden, wobei jeder Verbindungsabschnitt (6, 7) einen Steckbereich (8), der in einem assoziierten Buchsenbereich (9) des anderen Abschnitts (7, 6) gleitet, und einen Buchsenbereich (9), in dem der Steckbereich (8) des anderen Verbindungsabschnitts (7, 6) gleitet, beinhaltet, wobei der Steckbereich (8) jedes Verbindungsabschnitts (6, 7) mindestens einen Arm, der in mindestens einer Schiene des Buchsenbereichs (9) des anderen Verbindungsabschnitts (7, 6) gleitet, beinhaltet, wobei jeder Verbindungsabschnitt (6, 7) über mindestens einen Klip verfügt, sodass die miteinander verspannte Position der zwei Verbindungsabschnitte (6, 7) durch eine Klipverbindung erhalten wird, **dadurch gekennzeichnet, dass** jeder Verbindungsabschnitt (6, 7) ferner ein am Umfang des Verbindungsabschnitts (6, 7) vorspringendes Element (11) beinhaltet, das in eine Öffnung (12) des anderen Verbindungsabschnitts (7, 6) einklipst.

2. Teil (2) nach Anspruch 1, **dadurch gekennzeichnet, dass** der Aufnahmebereich (15) jedes Verbindungsabschnitts (6, 7) eine Nut ist.

3. Teil (2) nach Anspruch 1 oder 2, **dadurch gekennzeichnet, dass** jeder Verbindungsabschnitt (6, 7) ein Halbring ist, sodass das Teil (2) in der miteinander verspannten Position einen Ring bildet.

4. Teil (2) nach Anspruch 3, **dadurch gekennzeichnet, dass** die Aufnahmebereiche (15) der zwei Verbindungsabschnitte (6, 7) eine ringförmige Nut bilden, die in einer radialen Ebene des Teils (2) angeordnet ist.

5. Teil (2) nach Anspruch 4, **dadurch gekennzeichnet, dass** die Nut (15) durch zwei Außenränder (16, 17) mit unterschiedlichen radialen Breiten abgegrenzt wird.

6. Teil (2) nach einem der vorhergehenden Ansprüche, **dadurch gekennzeichnet, dass** in jeder Schiene eine Erhebung (13) angeordnet ist, die fähig ist, die zwei Verbindungsabschnitte (6, 7) in einer voneinander beabstandeten Position zu halten.

7. Vorrichtung (1) für das koaxiale Verbinden von zwei Stutzen (3, 4) durch das Zusammenwirken einer Endzone eines ersten Stutzens (3) mit einer Endzone eines zweiten Stutzens (4), wobei die Vorrichtung die zwei Stutzen (3, 4) beinhaltet, **dadurch gekennzeichnet, dass** sie ein Verbindungsteil (2) nach einem der Ansprüche 1 bis 6 beinhaltet, das um Verbindungselemente (31, 41) der zwei Stutzen (3, 4) angeordnet ist.

8. Vorrichtung (1) nach Anspruch 7, **dadurch gekennzeichnet, dass** jeder Stutzen (3, 4) ein Verbindungselement (31, 41) beinhaltet, wobei das Verbindungselement (31) des ersten Stutzens (3) ein Wulst ist und das Verbindungselement (41) des zweiten Stutzens (4) ein Bund ist.

9. Vorrichtung (1) nach Anspruch 7 oder 8, **dadurch gekennzeichnet, dass** sie ferner eine ringförmige Dichtung (5) beinhaltet.

10. Verfahren für das koaxiale Verbinden von zwei Stutzen (3, 4) mit Hilfe eines Verbindungsteils (2) nach einem der Ansprüche 1 bis 6, beinhaltend, in einer Endzone der zwei Stutzen (3, 4) und um die Verbindungselemente (31, 41) der zwei Stutzen (3, 4) herum, einen Schritt des Gleitens der zwei Verbindungsabschnitte (6, 7) von einer voneinander beabstandeten Position der zwei Abschnitte (6, 7) bis in eine miteinander verspannte Position der zwei Abschnitte (6, 7), in welcher die zwei Aufnahmebereiche (15) der zwei Abschnitte (6, 7) eine geschlossene Kontur bilden und die Verbindungselemente (31, 41) zusammenhalten.

11. Verfahren nach Anspruch 10, **dadurch gekennzeichnet, dass** es vor dem Schritt des Gleitens einen Schritt des Vorpositionierens des Verbindungsteils (2) in der voneinander beabstandeten Position der zwei Verbindungsabschnitte (6, 7) um eine Endzone eines der zwei Stutzen (3, 4) herum beinhaltet.

## Claims

1. Part (2) for coaxial connection of two tubes (3, 4), comprising two connection portions (6, 7), each provided with a receiving area (15) for a connection element (31, 41) of each tube (3, 4), the two connection portions (6, 7) being able to slide in one another, between a position in which the two portions (6, 7) are spaced apart and a position in which the two portions (6, 7) are closed up, in which the two receiving areas (15) can hold the connection elements (31, 41) together and form a closed contour, each connection portion (6, 7) comprising a male area (8) which slides in an associated female area (9) of the other portion (7, 6), and a female area (9) in which the male area (8) of the other connection portion (7, 6) slides, the male area (8) of each connection portion (6, 7) comprising at least one arm which slides in at least one rail of the female area (9) of the other connection portion (7, 6), each connection portion (6, 7) being provided with at least one clip, such that the position in which the two connection portions (6, 7) are closed up is obtained by clipping, **characterized in that** each connection portion (6, 7) also comprises an element (11) which projects from the periphery of the connection portion (6, 7) and which is clipped into an opening (12) in the other connection portion (7, 6).

2. Part (2) according to Claim 1, **characterized in that** the area (15) for receiving each connection portion (6, 7) is a groove.

3. Part (2) according to Claim 1 or 2, **characterized in that** each connection portion (6, 7) is a half-ring, such that in the closed-up position the part (2) forms a ring.

4. Part (2) according to Claim 3, **characterized in that** the areas (15) for receiving the two connection portions (6, 7) form an annular groove arranged in a radial plane of the part (2).

5. Part (2) according to Claim 4, **characterized in that** the groove (15) is delimited by two outer borders (16, 17) which have different radial widths.

6. Part (2) according to one of the preceding claims, **characterized in that** a boss (13) is arranged in each rail and can keep the two connection portions (6, 7) in a spaced-apart position.

7. Device (1) for coaxial connection of two tubes (3, 4), by cooperation of an end region of a first tube (3) with an end region of a second tube (4), the device comprising the two tubes (3, 4), **characterized in that** it comprises a connection part (2) according to one of Claims 1 to 6, which is arranged around connection elements (31, 41) of the two tubes (3, 4).

8. Device (1) according to Claim 7, **characterized in that**, with each tube (3, 4) comprising a connection element (31, 41), the connection element (31) of the first tube (3) is a roll and the connection element (41) of the second tube (4) is a collar.

9. Device (1) according to Claim 7 or 8, **characterized in that** it also comprises an annular seal (5).

10. Method for coaxial connection of two tubes (3, 4) by means of a connection part (2) according to one of Claims 1 to 6, comprising, in an end region of the two tubes (3, 4) and around the connection elements (31, 41) of the two tubes (3, 4), a step of sliding of the two connection portions (6, 7), from a position in which the two portions (6, 7) are spaced apart to a position in which the two portions (6, 7) are closed up, in which the two areas (15) for receiving the two portions (6, 7) form a closed contour and keep the connection elements (31, 41) together.

11. Method according to Claim 10, **characterized in that** it comprises, before the step of sliding, a step of pre-positioning of the connection part (2), in the position in which the two connection portions (6, 7) are spaced apart, around an end region of one of the two tubes (3, 4) .
